# EUROPEAN PATENT APPLICATION

(11) **EP 2 826 557 A1**
(43) Date of publication of application: **21.01.2015**
(21) Application number: 13176976.2
(22) Date of filing: 18.07.2013
(51) Int. Cl.: B01J 23/00, B01J 35/08, B01J 37/00

(54) **A chemical-looping process with a supported metal-based oxygen carrier**

(71) Applicant: VITO NV (Vlaamse Instelling voor Technologisch Onderzoek NV), 2400 Mol (BE)
(72) Inventor: Van Noyen, Jasper, 2610 Wilrijk (BE); Jacobs, Marijke, 2275 Lille (BE); Snijkers, Frans, 3930 Hamont-Achel (BE)
(74) Representative: Jansen, Cornelis Marinus

(57) **Abstract**

The present invention describes a chemical looping process for the oxidation of carbonaceous materials using an oxygen carrier comprised of a porous support and redox active sites characterized, in that said porous support is spherical; and said redox active sites are located at the surface of said porous support.

The invention further describes an oxygen carrier, a method for producing such oxygen carrier and the use thereof in a chemical-looping process cycle.

## Description

### TECHNICAL FIELD

The current invention relates to a chemical looping process for the oxidation of carbonaceous materials using an oxygen carrier.

More specifically, the current invention relates to a chemical looping process for the oxidation of carbonaceous materials using an oxygen carrier comprised of a porous support and redox active sites, whereby said porous support is spherical; and said redox active sites are located at the surface of said porous support.

### INTRODUCTION

Chemical-looping is a process in which a metal oxide is employed as an oxidant for e.g. CH₄, H₂ or CO conversion in a fluidized bed reactor. The reduced metal is brought to a separate fluidized bed reactor and oxidized using oxygen from a gas flow. Finally, the thus obtained metal oxide is re-used in the oxidation reaction.

A metal oxide suited for the process of carbonaceous liquids or gases in a chemical-looping process cycle are designated by the term "oxygen carrier." Oxygen carriers are mostly based on Cu, Ni, Co, Fe, or Mn.

The advantage of a chemical-looping process cycle is that the presence of N₂ in the flue gas stream is avoided since the oxidation of the combustion material such as a fuel takes places in absence of nitrogen or trace compounds present in the air. As such, a high energetic efficiency is obtained, and the exhaust of the oxidation reactor mainly contains water and carbon dioxide and no N₂.

The development of suitable oxygen carrier is of paramount importance for the efficiency of the chemical-looping process. Ideally, an oxygen carrier fulfils the following criteria:
- sufficient oxygen transfer capability;
- favorable thermodynamics regarding the conversion to CO₂;
- high reactivity in reduction and oxidation reactions which is maintained during many successive redox cycles;
- resistance to attrition to minimize losses of elutriated solids;
- negligible carbon deposition that would release CO₂ in the air reactor reducing CO₂ capture efficiency;
- good fluidization properties (absence of agglomeration); and
- limited cost, including environment, health and safety cost.

Compositions suitable as oxygen carrier are known from literature.

WO2004014793 describes compositions and methods to reduce NOₓ emissions from the flue gas of a fluid catalytic cracking (FCC) unit. The document also provides methods for reducing CO emissions from the regenerator and/or the flue of an FCC unit. The compositions described in the document comprise copper and/or cobalt and a carrier. The carrier can be, for example, hydrotalcite like compounds, spinels, alumina, zinc titanate, zinc aluminate, zinc titanate/zinc aluminate, and the like.

WO2012140292 relates to an oxygen carrier that can be obtained by means of a method that comprises: a) mixing 30% to 60% by weight of CuO and 40% to 70% by weight of MgAl₂O₄; b) subjecting the above mixture to a step of spray-drying; c) screening the material obtained in the preceding step until a particle size of between 100 and 500 microns is obtained; d) calcining the screened particles, resulting in the oxygen-carrying material. A further subject matter of the document is the use of said material in a solid combustion process with inherent CO₂ capture.

Unfortunately, many oxygen carriers have limited oxygen transfer capability, oxidation reactivity or resistance to attrition, suffer from poisoning through carbon deposition and/or a high economic and environmental cost.

More particularly, current technologies suffer from limited oxidation activity and a limited longevity under process conditions.

### SUMMARY OF THE INVENTION

The aim of the present invention is to provide a solution to overcome at least part of the above mentioned disadvantages. The invention thereto aims to provide a chemical looping process for the oxidation of carbonaceous materials using an oxygen carrier as described in claim 1.

In a first aspect, the current invention provides a chemical looping process for the oxidation of carbonaceous materials using an oxygen carrier comprised of a porous support and redox active sites, whereby said porous support is spherical; and said redox active sites are located at the surface of said porous support.

In a second aspect, the current invention provides an oxygen carrier suitable for the oxidation of carbonaceous materials using an oxygen carrier comprised of a porous support and redox active sites, whereby said porous support is spherical; and said redox active sites are located at the surface of said porous support.

In a third aspect, the current invention provides a method for preparing an oxygen carrier comprising the steps of:
(a) preparing a porous support; and
(b) providing said support with redox active sites at the surface of said support, whereby said porous support is prepared by spray-drying or other granulation of a suspension comprising precursors of said support; and/or said redox active sites are provided by impregnation of said porous support with a solution comprising a redox active material.

In a fourth aspect, the current invention provides a use of an oxygen carrier according to said second aspect of the invention, whereby carbon dioxide is captured by carbon dioxide capturing means, the heat produced is used for heating an air and/or fuel reactor or for generating electricity.

### DESCRIPTION OF THE FIGURES

The following figures are intended to assist the description of the invention and are nowhere meant as a limitation of the presently disclosed invention.

The figures and symbols contained therein have the meaning as commonly understood by one of ordinary skill in the art to which this invention belongs. By means of further guidance, figures are included to better appreciate the teaching of the present invention.
Figure 1 shows a schematic representation of a dual circulating fluidized bed reactor system.
Figure 2 shows a schematic representation of a dual circulating fluidized bed reactor system with an evacuation unit for carbon dioxide and water.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The term "chemical-looping process" or "chemical-looping process cycle" indicates any chemical-looping processes, such as, but not limited to combustion processes, reforming and biomass pyrolysis.

In a first aspect, the current invention provides a chemical looping process for the oxidation of carbonaceous materials using an oxygen carrier comprised of a porous support and redox active sites, whereby said porous support is spherical; and said redox active sites are located at the surface of said porous support.

The term "oxygen carrier" is used to indicate a material comprising at least two components, wherein the function of a first component is to form an active site for oxidation and reduction reactions as given in the reactions below:

CₙH₂ₘ + (2n+m) MₓO_{y} ↔ n CO₂ + m H₂O + (2n+m) MₓO_{y-1} (A)

O₂ + 2 MₓO_{y-1} ↔ 2 MₓO_{y} (B)

and wherein the function of a second component is to form a support in which the first component is contained or acts as a support for the first component. The active site is generally a metal oxide, based on Fe, Cu, Ni, Co or Mn, preferably based on Ni. In general, the material is a particle with a spherical form or a form which is nearly spherical.

An oxygen carrier as described above is advantageous since it has high strength and activity in a chemical combustion oxidation process and high longevity, allowing said oxygen carrier eventually to be used for more than 2.500 hours, more preferably than 10.000 hours, even more preferably more than 20.000 hours, most preferably more than 40.000 hours in an oxidation process. Furthermore, said oxygen carrier can be recovered from the reactor system and be recycled for further use.

The term "carbonaceous material" is used to indicate any material containing inorganic or organic bound carbon. Inorganic bound carbon indicates any carbon in an inorganic molecule such as in, but not limited to, carbon monoxide, cyanide, diamond or graphite. Organic bound carbon indicates any carbon in an organic molecule such as in, but not limited to, alkanes, alkenes, alkynes and/or aromatic hydrocarbons and/or hydrocarbons containing hetero-atoms.

In a preferred embodiment, the present invention provides a chemical looping process according the first aspect of the invention, whereby said spherical, porous support comprises a spinel with structure AB₂O₄, where A represents a divalent metal ion such as magnesium, iron, nickel, manganese and/or zinc, preferably magnesium, and B represent trivalent metal ions such as aluminium, iron, chromium or manganese, preferably aluminium; and/or whereby said redox active sites are comprised of a metal oxide, preferably copper oxide, iron oxide, manganese oxide, nickel oxide or a combination of any of the aforementioned oxides, more preferably nickel (II) oxide.

In a preferred embodiment, the present invention provides a chemical looping process according the first aspect of the invention, whereby said oxygen carrier has a longevity higher than 5000 hours when applied in a chemical looping combustion process at a temperature of 700 to 1200°C.

Preferably, said longevity is higher than 10000 hours, more preferably, higher than 20000 hours, most preferably, higher than 40000 hours.

This is advantageous since longevity of the material allows for the oxygen carrier to be used in many redox cycles, thereby lowering the amount of metal-containing waste generated by the process. The apt characteristics of the materials provided by the invention allow for said oxygen carriers to be successfully separated from the fuel oxidation reactor, to be re-oxidized and to be introduced into the fuel oxidation reactor again. Optionally, said oxygen carrier can be further subjected to a purification step according to the state-of-the-art purification methodologies for the removal of impurities, thereby optimizing the activity said oxygen carrier.

In a preferred embodiment, the present invention provides a chemical looping process according the first aspect of the invention, comprising the steps of:
- contacting said oxygen carrier and said carbonaceous material in a reactor;
- oxidizing said carbonaceous materials, thereby converting said oxygen carrier to a reduced oxygen carrier;
- evacuating said reduced oxygen carrier from said reactor; and
- oxidizing said reduced oxygen carrier, thereby obtaining an oxygen carrier with oxidized active sites.

In a preferred embodiment, the present invention provides a chemical looping process according the first aspect of the invention, further comprising the step of removing impurities from said oxygen carrier or from said reduced oxygen carrier. In a preferred embodiment, the present invention provides a chemical looping process according the first aspect of the invention, further comprising the step of repeated use of said oxygen carrier in at least one consecutive redox cycle.

In a further aspect, the invention provides in a use of said oxygen carrier in a chemical-looping process cycle for the oxidation of said carbonaceous material to carbon dioxide at a temperature between 700°C and 1200°C, preferably at a temperature between 800°C and 1000°C.

Thereby, said oxygen carrier is used to perform an oxidation reaction and/or whereby said oxygen carrier is subsequently re-oxidized and used for one or more redox cycles.

More specifically, said oxidation reaction relates to a reaction according to equation (A) and/or (B):

CₙH₂ₘ + (2n+m) MₓO_{y} ↔ n CO₂ + m H₂O + (2n+m) MₓO_{y-1} (A)

O₂ + 2 MₓO_{y-1} ↔ 2 MₓO_{y} (B)

The term "first fluidized bed reactor" is used as synonym for the term "air reactor." The air reactor (1) comprises a valve for an oxygen rich air inflow (3) and a valve for an oxygen depleted air outflow (4), whereby the oxygen content of the air outflow (4) is lower than the oxygen content of the air inflow (3). In addition, the air reactor (1) is in a first fluid connection (7) with a second fluidized bed reactor (2) for transferring the oxidized oxygen carrier and is in a second, separate fluid connection (8) for transferring the reduced oxygen carrier to the first fluidized bed reactor (1).

The term "second fluidized bed reactor" is used as synonym for the term "fuel reactor." The fuel reactor (2) comprises a fuel inlet valve (5) and an outlet valve (6) for the outlet of carbon dioxide (10) and other components such as, for example, water (9). The fuel reactor (2) is in connection with the air reactor (1) as described in the paragraph above.

The term "dual circulating fluidized bed reactor system" is used to indicate any system comprising a first fluidized bed reactor and a second fluidized bed reactor, whereby the first fluidized bed reactor is in dual fluid connection with the second fluidized bed reactor, whereby the first fluid connection is used for transfer of a material from the first to the second reactor and whereby the second fluid connection is used for transfer of another material from the second to the first reactor.

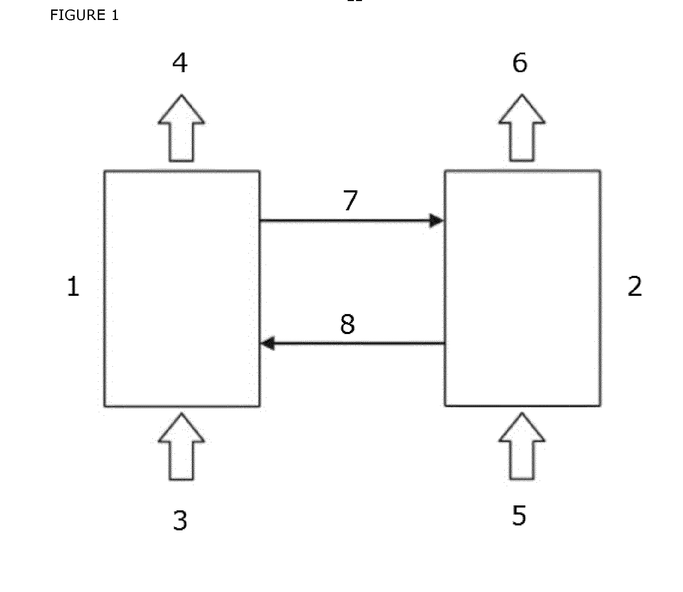

Figure 1 shows a schematic representation of a dual circulation fluidized bed reactor system as described in the above paragraphs. An oxygen rich air flow (3) is continuously led into the air reactor (1). In the air reactor (1), oxygen carrier is oxidized by oxygen from the air. An oxygen depleted air flow (4) is evacuated from the air reactor (1). The oxidized oxygen carrier is transferred via a fluid connection (7) to the fuel reactor (2). Fuel (5), for example a carbonaceous material, is continuously led into the fuel reactor (2). In the fuel reactor (2), carbonaceous material is oxidized and the oxygen carrier is reduced. Carbon dioxide and water are evacuated from the fuel reactor (2). The reduced form of the oxygen carrier is transferred to the air reactor (1) via a fluid connection (8).

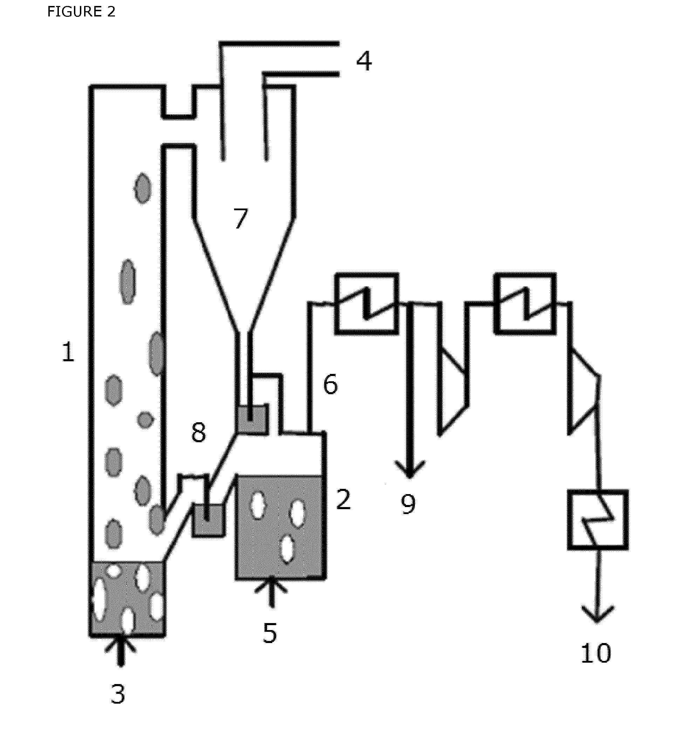

Figure 2 shows a schematic representation of a dual circulation fluidized bed reactor system with indication of separation unit for carbon dioxide and water. An oxygen rich air flow (3) is continuously led into the air reactor (1). In the air reactor (1), oxygen carrier is oxidized by oxygen from the air. An oxygen poor air flow (4) is evacuated from the air reactor (1). The oxidized oxygen carrier is transferred via a fluid connection (7) to the fuel reactor (2). Fuel (5), for example a carbonaceous material, is continuously led into the fuel reactor (2). In the fuel reactor (2), carbonaceous material is oxidized and the oxygen carrier is reduced. The reduced form of the oxygen carrier is transferred to the air reactor (1) via a fluid connection (8). Carbon dioxide (10) and water (9) are evacuated from the fuel reactor (2) and further treated and separated using a water condenser and compressors.

In chemical-looping combustion, CO₂ is separated from the rest of the flue gases without an energy consuming gas separation process. Hence, this technique has emerged as an attractive option to other CO₂ separation techniques, and as an alternative by which fossil fuels can be utilized without contributing to an increased atmospheric CO₂ concentration. The technique involves the use of metal (M) oxide particles with the purpose of transferring oxygen from an air reactor (1) to a fuel reactor (2). In the fuel reactor (2), the fuel in gaseous form reacts with the metal oxide according to reaction (A) and in the air reactor (1) the reduced metal (M) oxide is re-oxidized according to reaction (B);

CₙH₂ₘ + (2n+m) MₓO_{y} ↔ n CO₂ + m H₂O + (2n+m) MₓO_{y-1} (A)

O₂ + 2 MₓO_{y-1} ↔ 2 MₓO_{y} (B)

The exhaust gas stream (6) from the fuel reactor (2) contains CO₂ (10) and H₂O (9), which are separated in a condenser before CO₂ is compressed to a liquid, suitable for sequestration. The air reactor exhaust (4) contains oxygen depleted air. The total amount of heat evolved from reaction (A) and (B) is the same as for traditional combustion, where the oxygen and fuel are in direct contact. A proposed design of the process is displayed in Figure 2, where the air reactor (1) is a riser with a gas velocity high enough to entrain the oxygen carrier particles. Oxidized particles are separated from the flue gases in a cyclone, and led to the fuel reactor (2) where they are reduced by the gaseous fuel and transported back to the air reactor (1) by gravitation or under influence of the gas flow. Particle locks prevent gas mixing between the two reactors. This design appears similar to a circulating fluidized bed boiler for solid fuels, thus using well proven technology and components.

In a second aspect, the current invention provides an oxygen carrier suitable for the oxidation of carbonaceous materials using an oxygen carrier comprised of a porous support and redox active sites, characterized, in that said porous support is spherical; and said redox active sites are located at the surface of said porous support.

In a preferred embodiment, the present invention provides an oxygen carrier according to the second aspect of the invention, whereby the porous support comprises a compound with a spinel structure, preferably a magnesium aluminate spinel.

Magnesium aluminate spinel is a member of a group of oxides that have the same crystal structure, which is named the spinel structure. The spinel group contains over twenty members, but only a few are considered common. The general formula of the spinel group is AB₂O₄, where A represents a divalent metal ion such as magnesium, iron, nickel, manganese and/or zinc, and B represents trivalent metal ions such as aluminium, iron, chromium or manganese.

The spinel structure which is formed during sintering is advantageous in that it provides a stronger substrate compared to more commonly used substrate materials such as alpha- or gamma-alumina. This provides a higher resistance against attrition and eventually allows for a higher longevity in the chemical looping process.

In a preferred embodiment, the present invention provides an oxygen carrier, whereby said support is comprised of a ceramic phase comprising preferably aluminate and at least one cation, preferably selected from the group: Ca²⁺, Ni²⁺ and Mg²⁺.

In a preferred embodiment, the present invention provides an oxygen carrier according to the second aspect of the invention, whereby said spherical, porous support comprises magnesium and aluminate; and/or whereby said redox active sites are comprised of nickel (II) oxide.

In a preferred embodiment, the present invention provides an oxygen carrier according to the second aspect of the invention, comprising preferably 95 wt-% to 50 wt-% of said porous aluminate support and 5 wt-% to 50 wt-% of said nickel (II) oxide.

More preferably, said oxygen carrier is comprised of 90 wt-% to 60 wt-% of said porous aluminate support and of 10 wt-% to 40 wt-% of said nickel (II) oxide.

In a preferred embodiment, the present invention provides an oxygen carrier, whereby said oxygen carrier is a powder consisting of particles whereby at least 80% of said particles have a size comprised between 50 µm and 250 µm.

In a preferred embodiment, the present invention provides an oxygen carrier, whereby the attrition of said oxygen carrier is at most 1.0 % after 1 hour and at most 7.0 % after 5 hours.

In a more preferred embodiment, the present invention provides an oxygen carrier, whereby the attrition of said oxygen carrier is at most 0.5 % after 1 hour and at most 5.0 % after 5 hours.

The term "attrition" refers to the phenomenon of physical wear that is the result of erosion or the material degradation or loss of mechanical properties that is the result of friction. Attrition is measured using the Air Jet method (ASTM5757) and is expressed as the fraction of material loss expressed as a weight percentage.

In a preferred embodiment, the present invention provides an oxygen carrier, whereby the crushing strength of said oxygen carrier is comprised between 0.1 N and 10 N, more preferably between 1 N and 10 N. In a more preferred embodiment, the present invention provides an oxygen carrier, whereby the crushing strength of said oxygen carrier is comprised between 1 N and 7 N. In a more preferred embodiment, the present invention provides an oxygen carrier, whereby the crushing strength of said oxygen carrier is about 3 N.

The term "crushing strength" is used to indicate the load required to cause a crack to form in a sintered metal powder bearing (ASTM B-438 and B-439). Crushing strength is measured using a handheld Shimpo FGN-5 or an Instron 5582 test bench and is expressed in Newton, N.

In a preferred embodiment, the present invention provides an oxygen carrier, whereby the sphericity, which is expressed by its aspect ratio, of said particles is at least 0.75. In a more preferred embodiment, the present invention provides an oxygen carrier, whereby the sphericity, which is expressed by its aspect ratio, of said particles is at least 0.85. In a most preferred embodiment, the present invention provides an oxygen carrier, whereby the sphericity, which is expressed by its aspect ratio, of said particles is at least 0.90.

The term "sphericity" of a particle refers to the degree in which a particle is spherical and is determined by scanning electron microscope, abbreviated as SEM, or optical microscopy, eventually supported by Image Analysis. The sphericity is expressed by the aspect ratio, which is herein to be understood as the ratio of the smallest diameter of a particle with the same volume of the given particle to the largest diameter of the particle. The aspect ratio equals 1 for a spherical object and is smaller than 1 for any object which is not spherical.

In a preferred embodiment, the present invention provides an oxygen carrier, whereby the porosity of said particle is comprised between 15% and 60%.

The term "porosity" is used to indicate the fraction of a material that is void or empty relative to the total volume of a material. Porosity is thus expressed as a percentage between 0% and 100%. The characteristics of porosity are expressed through the specific surface area, measured by N₂ physisorption, and through pore size distribution or tortuosity, measured by Hg porosimetry.

In a third aspect, the current invention provides a method for preparing an oxygen carrier comprising the steps of:
(a) preparing a porous support; and
(b) providing said support with redox active sites at the surface of said support,
whereby said porous support is prepared by spray-drying or other granulation of a suspension comprising precursors of said support; and/or said redox active sites are provided by impregnation of said porous support with a solution comprising a redox active material.

In a preferred embodiment, the present invention provides a method for production of an oxygen carrier comprising the steps of:
- suspending metal oxides, preferably magnesium oxide and aluminium oxide, and optionally a sacrificial pore forming agent in water to give a suspension;
- granulating solids in said suspension to give granules;
- calcining and reaction-sintering of said granules to obtain porous metal oxide support, preferably magnesium aluminate support;
- impregnating said porous substrate with a solution of metal salt
- treating said impregnated porous substrate at elevated temperature to give oxygen carrier particles.

Aluminium oxide has a general formula of Al₂O₃, and can be suspended or dissolved in the aqueous solution in the form of different crystal structures, for example, but not limited to α-Al₂O₃ or γ-Al₂O₃.

Alternatively, aluminium oxide can be suspended or dissolved in the aqueous solution in a hydrated form, such as Al₂O₃.*n*H₂O where *n* is a number between 1 and 25, more preferably between 1 and 12.

Alternatively, aluminium oxide can be suspended or dissolved in the aqueous solution as a chemically related compound, such as Al₂O₄²⁻, or a salt thereof, such as but not limited to, Na₂Al₂O₄, NiAl₂O₄, MgAl₂O₄ or CaAl₂O₄, preferably MgAl₂O₄.

Nickel (II) oxide has a general formula of NiO, and can be suspended or dissolved in the aqueous solution in the form of different crystal structures, for example, but not limited to, octahedral and can be used in its non-stoichiometric form where the Ni:O ratio deviates from a 1:1 ratio.

Alternatively, nickel (II) oxide can be suspended or dissolved in the aqueous solution as a nickel-based salt, such as for example, but not limited to, Ni(NO₃)₂.6H₂O, or a nickel salt whereby nickel is a bivalent cation.

The term "spray-drying" is used to indicate the method or the process of forming a substantially dry, granulated powder comprised of solid particles from a liquid or a suspension by rapidly drying the liquid or suspension with a hot gas. A typical spray dryer consists of a spray nozzle or an atomizer for forming droplets with a controlled size distribution, which are consecutively brought in a flow of hot air, thereby evaporating the solvent, whereby the solvent can be water, and forming particles with consistent size distribution.

Alternatively to a spray-drying process for the formation of the particles, other known processes for the formation of granulates can, such as, but not limited to, a freeze granulation process is used.

The term "freeze granulation" is used to indicate the method or the process of forming granules, typically of a ceramic compound or powder using the steps of forming droplets of a precursor suspended in water and bringing said droplets in liquid nitrogen, thereby freezing said droplets. Subsequently, water is removed from the obtained frozen droplets by sublimation, thereby obtaining homogeneous, spherical granules.

The term "impregnation" is used to indicate a method or process of depositing a material, i.e. an active metal oxide, on a support. Typically, a metal precursor is dissolved or suspended in solution, preferably an aqueous solution, and brought into contact with a preformed support. The active metal precursor forms a deposit in the pores of the support.

The term "calcination" is a synonym of the term "calcining" and is used to indicate a process of thermal treatment, whereby a material is heated in presence of air with the purpose of thermally decomposing certain compounds, for example, but not limited to, organic substances, whereby the organic substance can contain functional groups such as, but not limited to hydroxyl groups, or inorganic substances comprising for example, but not limited to, carbonates, contained in the material and subsequently removing of the volatile fraction.

The term "sintering" is used to indicate a process whereby a powder is heated according to a predetermined temperature profile to a temperature below the melting point of the material, consequently fusing the particles together through atomic diffusion across boundaries of the particles.

In a further aspect, the invention provides in a method for production of said oxygen carrier comprising the steps of:
a. suspending aluminium oxide in deionized water thereby obtaining a suspension;
b. adding organic additives such as organic binders and dispersants to said suspension;
c. forming granules from said suspension using spray-drying and/or other granulation techniques, thereby obtaining granules;
d. sieving said granules thereby obtaining a sieved powder;
e. calcining said sieved powder thereby obtaining a calcined powder;
f. sintering said calcined powder thereby obtaining said porous support;
g. depositing a redox active material, such as nickel (II) oxide, on the surface of said porous support, thereby obtaining an oxygen carrier.

Thereby, aluminium oxide particles are suspended in deionized water, said organic additives are organic binders and/or dispersants, said suspension is granulated, sintering takes place under an oxidising atmosphere at temperatures between 1100°C and 1700°C, preferably between 1300°C and 1500°C, for at least 30 minutes, preferably for 4 hours.

In a preferred embodiment, the present invention provides a method, whereby 0.1 wt-% to 20 wt-% of MgO and/or Ca(OH)₂ is added to said suspension. In a more preferred embodiment, the present invention provides a method, whereby 1 wt-% to 10 wt-% of MgO and/or Ca(OH)₂ is added to said suspension.

Optionally, the suspension also contains 5 to 50 wt-% of a sacrificial pore former material, more preferably 10 to 40 wt-%, most preferably, 15, 20, 25, 30 or 35 wt-%, or any amount there in between. Said filler material is added to enhance porosity and is a carbonaceous material that oxidizes to CO₂ under calcination circumstances. Examples are, but not limited to, graphite, potato starch and wheat starch.

In a preferred embodiment, the present invention provides a use of said oxygen carrier, whereby said carbon dioxide is captured by carbon dioxide capturing means, the heat produced is used for heating an air and/or fuel reactor or for the purpose of generating hot air, water or other fluids, or for the purpose of generating steam or electricity.

The term "carbon dioxide capturing means" is used to indicate any means intended to prevent or suitable for preventing carbon dioxide to enter the atmosphere. Possible methods for carbon dioxide capture, storage or sequestration are based on physical sequestration by for example, but not limited to, geological storage, ocean storage or storage under pressure or based on chemical sequestration by for example, but not limited to, mineral storage or storage upon reaction with a chemical base.

### EXAMPLES

### EXAMPLE 1-24

Oxygen carrier particles with high sphericity, good free-flowing properties and homogeneity on the micro-scale, were prepared by the industrial spray-drying method, using commercial raw or semi-finished materials. In order to do so, a powder mixture of inorganic materials as indicated in Table 1 were dispersed in deionized water with the necessary organic additives. Various inorganic raw materials were used. Polyethyleneoxide and/or polyvinylalcohol and/or polyethyleneglycol were used as organic binder, Darvan (types C and C-N, RT Vanderbilt) and/or Dolapix (types A88, PC75 and PC80, Zschimmer & Schwarz) and/or Targon 1128 (from BK Giulini Chemie) were used as dispersants.

Appropriate amounts of the above materials were weighed before suspending in deionized water. The suspension was homogenized either by milling in a planetary ball mill for small quantities or by means of an horizontal attrition mill for larger amounts.

The water-based suspension was continuously stirred with a propeller blade mixer while being pumped to the 2-fluid spray dry nozzle, positioned in the lower cone part of the spray drier (type 6.3-SD, Niro, Denmark). Air in temperature was 220°C, air out temperature was 210°C. A flow of 210 kg/h was maintained.

After spray drying, the fraction within the required particle size range (100 to 212 µm) was separated from the rest of the spray dried product by sieving the chamber fraction. In order to obtain oxygen carrier particles with sufficient mechanical strength, sintering was performed in air at top temperatures in the range of 1300°C to 1500°C for 4 hours, using high temperature furnaces.

Ni-based oxygen carriers were prepared by addition of a volume of a saturated solution (20 °C, 4.2 M) of Ni(NO₃)₂ 6H₂O (>99.5% Panreac) corresponding to the total pore volume of the support particles. The aqueous solution was slowly added to the support particles, with thorough stirring at room temperature. The desired active phase loading was achieved by applying successive impregnations followed by calcining at 550 °C, in air atmosphere for 30 min, to decompose the impregnated metal nitrates into insoluble metal oxide. Finally, the carriers were sintered for 1 h at the desired calcining temperature. Oxygen carriers impregnated on α-Al₂O₃ with NiO weight contents ranging from 11% to 38% were prepared.

Table 1 and 2 describe respectively, the parameters for preparing a spherical, porous aluminate support using spray-drying techniques; and physical characterization parameters of said spherical, porous support.

**Table 1. Parameters for the preparation of a spherical, porous support.**

| Example | Composition | | | Sinter profile | |
|---|---|---|---|---|---|
| | | | | Temperature (°C) | Dwell time (h) |
| EX. 1 | MgO | Al₂O₃ | | 1450 | 4 |
| EX. 2 | MgO | Al₂O₃ | | 1500 | 4 |
| EX. 3 | MgO | Al₂O₃ | | 1550 | 4 |
| EX. 4 | Mg(OH)₂ | Al₂O₃ | | 1450 | 4 |
| EX. 5 | Mg(OH)₂ | Al₂O₃ | | 1500 | 4 |
| EX. 6 | Mg(OH)₂ | Al₂O₃ | | 1550 | 4 |
| EX. 7 | MgO | Al₂O₃ | graphite 15% | 1450 | 4 |
| EX. 8 | MgO | Al₂O₃ | graphite 15% | 1500 | 4 |
| EX. 9 | MgO | Al₂O₃ | graphite 15% | 1550 | 4 |
| EX. 10 | MgO | Al₂O₃ | graphite 40% | 1450 | 4 |
| EX. 11 | MgO | Al₂O₃ | graphite 40% | 1500 | 4 |
| EX. 12 | MgO | Al₂O₃ | graphite 40% | 1550 | 4 |
| EX. 13 | MgAl₂O₄ | Al₂O₃ | potato starch 15% | 1450 | 4 |
| EX. 14 | MgAl₂O₄ | Al₂O₃ | potato starch 15% | 1500 | 4 |
| EX. 15 | MgAl₂O₄ | Al₂O₃ | potato starch 15% | 1550 | 4 |
| EX. 16 | MgAl₂O₄ | Al₂O₃ | wheat starch 15% | 1450 | 4 |
| EX. 17 | MgAl₂O₄ | Al₂O₃ | wheat starch 15% | 1500 | 4 |
| EX. 18 | MgAl₂O₄ | Al₂O₃ | wheat starch 15% | 1550 | 4 |
| EX. 19 | MgO | Al₂O₃ | potato starch 15% | 1450 | 4 |
| EX. 20 | MgO | Al₂O₃ | potato starch 15% | 1500 | 4 |
| EX. 21 | MgO | Al₂O₃ | potato starch 15% | 1550 | 4 |
| EX. 22 | MgO | Al₂O₃ | wheat starch 15% | 1450 | 4 |
| EX. 23 | MgO | Al₂O₃ | wheat starch 15% | 1500 | 4 |
| EX. 24 | MgO | Al₂O₃ | wheat starch 15% | 1550 | 4 |

**Table 2. Physical characterization parameters of said spherical, porous support.**

| | Physical characterization parameters | | | | | |
|---|---|---|---|---|---|---|
| | Crushing strength (N) | Porosity (mm³/g) | Pore size range | Crystallite size (nm) | XRD (% of MgAl₂O₄-spinel) | SSA (m³/g) |
| EX. 1 | 1,63±0,6 | 288 | 0,1-1 | 47,47 | 95,9 | 0,789 |
| EX. 2 | 2,28±0,84 | 275 | | 50,98 | 97,2 | |
| EX. 3 | 2,49±0,45 | 115 | | 60,65 | 97,4 | 0,18 |
| EX. 4 | 0,80±0,21 | 375 | | 72,27 | 96,2 | 1,88 |
| EX. 5 | 0,62±0,25 | 300 | | 79,35 | 97,6 | |
| EX. 6 | 1,03±0,22 | 260 | | 89,54 | 98,8 | 1,03 |
| EX. 7 | 0,65±0,10 | 360 | | 57,53 | 98,1 | 2,134 |
| EX. 8 | 1,06±0,30 | 270 | | 61,89 | 98,2 | 1,21 |
| EX. 9 | 1,50±0,77 | 180 | | 73,59 | 99,5 | 0,668 |
| EX. 10 | 0,06±0,11 | 850 | | n.a. | n.a. | 9,68 |
| EX. 11 | 0,17±0,070 | 540 | | 71,8 | 99,4 | 1,36 |
| EX. 12 | 0,52±0,16 | 360 | | 80,54 | 99,4 | 0,047 |
| EX. 13 | 1,33±0.43 | 115 | 0,01-1 | 89,84 | 100 | 1,2 |
| EX. 14 | 1,15±0.45 | 120 | 0,01-1 | 93,57 | 100 | 0,73 |
| EX. 15 | 1,23±0.29 | 90 | 0,01-1 | 96,58 | 100 | 1,07 |
| EX. 16 | 2,01±0.56 | 150 | 0,01-1 | 81,67 | 100 | 3,11 |
| EX. 17 | 1,57±0.91 | 130 | 0,01-1 | 96,58 | 100 | 0,61 |
| EX. 18 | 1,7±0.84 | 125 | 0,01-1 | 99,8 | 100 | 0,47 |
| EX. 19 | 0,24±0.05 | 490 | 0,1-1 | 63,24 | 96,5 | 4,05 |
| EX. 20 | 0,2±0.15 | 375 | 0,1-1 | 62,36 | 97,7 | 2,3 |
| EX. 21 | 0,86±0.26 | 270 | 0,1-1 | 66,03 | 98,5 | 1,19 |
| EX. 22 | 0,27±0.22 | 500 | 0,1-1 | 58,66 | 96,7 | 3,4 |
| EX. 23 | 0,33±0.17 | 430 | 0,1-1 | 62,37 | 96,6 | 2,74 |
| EX. 24 | 1,06±0.24 | 420 | 0,1-1 | 62,37 | 97,8 | 1,11 |

| | | | | | | |
|---|---|---|---|---|---|---|
| n.a. : data not available | | | | | | |

## Claims

1. A chemical looping process for the oxidation of carbonaceous materials using an oxygen carrier comprised of a porous support and redox active sites **characterized, in that** said porous support is spherical; and said redox active sites are located at the surface of said porous support.

2. A chemical looping process according to claim 1, whereby said spherical, porous support comprises a spinel with structure AB₂O₄, where A represents a divalent metal ion such as magnesium, iron, nickel, manganese and/or zinc, preferably magnesium, and B represent trivalent metal ions such as aluminium, iron, chromium or manganese, preferably aluminium; and/or whereby said redox active sites are comprised of a metal oxide, preferably copper oxide, iron oxide, manganese oxide, nickel oxide or a combination of two or more metal oxides, preferably nickel (II) oxide.

3. A chemical looping process according to claim 1 or 2, whereby said oxygen carrier has a longevity higher than 5000 hours when applied in a chemical looping combustion process at a temperature of 700 to 1200°C.

4. A chemical looping process according to any of the preceding claims, comprising the steps of:
- contacting said oxygen carrier and said carbonaceous material in a reactor;
- oxidizing said carbonaceous materials, thereby converting said oxygen carrier to a reduced oxygen carrier;
- evacuating said reduced oxygen carrier from said reactor; and
- oxidizing said reduced oxygen carrier, thereby obtaining an oxygen carrier.

5. A chemical looping process according any of the preceding claims, further comprising the step of removing impurities from said oxygen carrier or from said reduced oxygen carrier.

6. A chemical looping process according any of the preceding claims, further comprising the step of repeated use of said oxygen carrier in a consecutive redox cycle.

7. An oxygen carrier suitable for the oxidation of carbonaceous materials using an oxygen carrier comprised of a porous support and redox active sites, **characterized, in that** said porous support is spherical; and said redox active sites are located at the surface of said porous support.

8. An oxygen carrier according to claim 7, whereby said spherical, porous support comprises magnesium and aluminate; and/or whereby said redox active sites are comprised of nickel (II) oxide.

9. An oxygen carrier according to any one of claims 7 or 8, comprising preferably 95 wt-% to 50 wt-% of said porous aluminate support and 5 wt-% to 50 wt-% of said nickel (II) oxide.

10. An oxygen carrier according to any one of claims 7 to 9, whereby said oxygen carrier is a powder consisting of particles whereby at least 80% of said particles have a size comprised between 50 µm and 250 µm.

11. An oxygen carrier according to any one of claims 7 to 10, whereby the attrition of said oxygen carrier is at most 1.0 % after 1 hour and at most 7.0 % after 5 hours.

12. An oxygen carrier according to any one of claims 7 to 11, whereby the crushing strength of said oxygen carrier is comprised between 0.25 N and 10 N, more preferably between 1 N and 10 N.

13. An oxygen carrier according to any one of claims 7 to 12, whereby the sphericity of said particles is at least 0.75.

14. A method for preparing an oxygen carrier comprising the steps of:
a. preparing a porous support; and
b. providing said support with redox active sites at the surface of said support,
**characterized, in that** said porous support is prepared by spray-drying or other granulation of a suspension comprising precursors of said support; and/or said redox active sites are provided by impregnation of said porous support with a solution comprising a redox active material.

15. Use of a oxygen carrier as described in 7 to 12, whereby carbon dioxide is captured by carbon dioxide capturing means, the heat produced is used for heating an air and/or fuel reactor or for generating electricity.
